(19) Europäisches Patentamt
European Patent Office
Office européen des brevets

(11) EP 1 925 650 B1

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(51) Int Cl.:
***C09J 153/00*** (2006.01) ***C09J 7/02*** (2006.01)
***B32B 7/12*** (2006.01)

(21) Anmeldenummer: **07119812.1**

(22) Anmeldetag: **01.11.2007**

# (54) Doppelseitige Selbstklebebänder

Double sided pressure sensitive adhesive tapes

Bandes auto-adhésives à double face

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.11.2006 DE 102006055094**

(43) Veröffentlichungstag der Anmeldung:
**28.05.2008 Patentblatt 2008/22**

(73) Patentinhaber: **TESA SE**
**20253 Hamburg (DE)**

(72) Erfinder:
- **Husemann, Dr. Marc**
  **22605, Hamburg (DE)**
- **Dollase, Dr. Thilo**
  **22397, Hamburg (DE)**

(56) Entgegenhaltungen:
**WO-A-03/000819** **WO-A-03/057497**
**US-A1- 2004 229 000** **US-B1- 6 734 256**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft doppelseitige Selbstklebebänder.

Kaschierhaftklebemassen sind in der Haftklebebandindustrie relativ weit verbreitet. An diese spezielle Klasse werden häufig sehr hohe Anforderungen gestellt. Die Kaschierklebemasse erfüllt bei den Haftklebebändern den Zweck, den Haftklebebandverbund zusammenzuhalten. Daher werden hier sehr hohe Verklebungsfestigkeiten gefordert. Weiterhin werden sehr häufig unterschiedliche Trägermaterialien miteinander verklebt, so dass Kaschierklebemassen auf Trägern mit unterschiedlichen Polaritäten nahezu gleich gut haften müssen.

Ferner werden Kaschierklebemassen zu zumindest einem Trägermaterial zukaschiert. Dementsprechend erfordert die Verarbeitung von Kaschierklebemassen einen weiteren Verarbeitungsschritt der bevorzugt einfach, schnell und effizient verlaufen sollte.

Bisher werden als Kaschierklebemassen sehr häufig Acrylathaftklebemassen eingesetzt, die diesen Zweck zwar erfüllen, die aber sehr unterschiedliche Klebkräfte auf unterschiedlich polaren Untergründen aufweisen. Zudem müssen diese Haftklebemassen in einem zusätzlichen Prozessschritt vernetzt werden, was wiederum eine Geschwindigkeitsbeschränkung für den Prozess bedeutet. Ferner kann die für die Vernetzung erforderliche Behandlung der frisch beschichteten Haftklebemasse - beispielsweise Einwirkung actinischer Strahlung - dadurch erschwert werden, dass bereits unmittelbar nach der Beschichtung auf einem Träger ein weiterer Träger zukaschiert wird.

Es besteht somit der Bedarf für ein doppelseitigs Selbstklebeband, dessen Kaschierklebemasse auf, unterschiedlichen Trägermaterialien gleich gute Klebkräfte besitzt.

Gelöst wird die Aufgabe überraschenderweise durch ein doppelseitiges Selbstklebeband gemäß Anspruch 1, dessen Kaschierklebemassen selbstvernetzend sind und auf Oberflächen mit 30 bis 50 mN/m eine Sofortklebkraft von mindestens 2 N/cm, vorzugsweise mindestens 3,5 N/cm, nach Testmethode A aufweisen.

Zur Messung der Oberflächenenergien und Klebkräfte sei auf den Abschnitt "Testmethoden" verwiesen.

Dadurch, dass die Klebemassen selbstvernetzend sind, können sie sehr einfach verarbeitet werden. Nach der Aufbringung ist kein weiterer Behandlungsschritt erforderlich, so dass auch das Zukaschieren eines weiteren Trägers kein Problem darstellt.

Besonders vorteilhaft wird die Klebemasse eingesetzt, wenn zwei unterschiedliche Trägermaterialien verklebt werden, deren Oberflächenenergie sich um mindestens 4 mN/m unterscheidet, wobei die Klebemasse sehr ähnliche Haftklebekräfte auf den jeweiligen Oberflächen der Trägermaterialien entwickelt. Die Haftklebemasse bewirkt somit einen Ausgleich zwischen den sehr unterschiedlich polaren Trägermaterialien, gleicht diesen Unterschied aus und sorgt dafür, dass der Haftverbund zu beiden Trägermaterialien gleich gut ist und der Verbund bis zu einem sehr hohen Niveau zusammenhält.

Auf diese Weise wird das erfindungsgemäße, doppelseitige Haftklebeband hergestellt, das Oberflächen mit vollständig unterschiedlichen Eigenschaften verbinden kann, da die auf der jeweiligen Seite des Haftklebebandes aufgebrachten Haftkleber aufgrund der unterschiedlichen Träger ebenfalls stark unterschiedliche Eigenschaften entsprechend den zu verbindenden Oberflächen aufweisen können.

Die Kaschierklebemasse wird dabei vorteilhaft derart gewählt, dass sie selbstständig ohne weitere technische Modifikationen durch Selbstorganisation klebrige und nichtklebrige Segmente in der Haftklebemasse ausbilden.

Der Kaschierklebeverbund weist zwei Träger auf, insbesondere in Form von Folien, Schäumen oder Folien und Schäumen. Es können auch aufgeschäumte Folien, geätzte Folien, vorbehandelte Folien, aufgeraute Folien oder generell vorbehandelte Folien oder Schäume zur Verklebung eingesetzt werden.

Bei dem doppelseitig beschichteten Haftklebeband können die beiden äußeren Haftklebeschichten ebenfalls aus einer selbstvernetzenden Haftklebemasse bestehen, je nach Anwendungsbereich kann es aber auch von Vorteil sein, eine andere, bekannte Haftklebemasse oder Klebemasse einzusetzen, insbesondere auch solche, die nicht physikalisch selbstvernetzend ist.

Besonders vorteilhaft werden solche Kaschierklebemassen eingesetzt, deren Basis von einem Blockcopolymer oder mehreren Blockcopolymeren gebildet wird, wobei das Blockcopolymer bzw. mindestens eines der mehreren Blockcopolymere durch eine oder mehrere der allgemeinen Formeln:

$$P(A)\text{-}P(B)\text{-}P(A) \qquad (I)$$

$$P(B)\text{-}P(A)\text{-}P(B)\text{-}P(A)\text{-}P(B) \qquad (II)$$

$$[P(A)\text{-}P(B)]_nX \qquad (III)$$

$$[P(A)\text{-}P(B)]_nX[P(A)]_m \qquad (IV)$$

beschrieben wird, wobei

- n = 3 bis 12, m = 3 bis 12 und X eine multifunktionelle Verzweigungseinheit darstellt, also ein chemisches Bauelement, über das mehrere Polymerarme miteinander verknüpft sind,
- die Polymerblöcke P(A) unabhängig voneinander Homo- und/oder Copolymerblöcke aus den Monomeren A repräsentieren, wobei die Polymerblöcke P(A) jeweils eine im Bereich von + 20 °C bis + 175 °C liegende Erweichungstemperatur aufweisen,
- die Polymerblöcke P(B) unabhängig voneinander Homo- und/oder Copolymerblöcke aus den Monomeren B repräsentieren, wobei die Polymerblöcke P(B) jeweils eine im Bereich zwischen - 130 °C bis + 10 °C liegende Erweichungstemperatur aufweisen, und
- die Polymerblöcke P(A) und P(B) nicht homogen miteinander mischbar sind.

Unter Erweichungstemperatur wird in diesem Zusammenhang bei amorphen Systemen die Glasübergangstemperatur und bei semikristallinen Polymeren die Schmelztemperatur verstanden. Glastemperaturen werden als Ergebnisse aus quasistationären Verfahren, wie z. B. Differential Scanning Calorimetry (nach DIN 53765, Aufheiz- und Abkühlrate 20 K/min) angegeben.

Besonders vorteilhaft lässt sich als selbstvernetzende Kaschierklebemasse eine solche auf Basis zumindest eines Blockcopolymers einsetzen, das der vorgenannten Definition genügt. Es hat sich überraschend herausgestellt, dass Kaschierklebemassen auf Acrylatblockcopolymerbasis für die erfindungsgemäße Verwendung eine Reihe von Vorteilen aufweisen:

- Nutzungsmöglichkeit einer großen Anzahl von Monomeren für die Synthese der Blockcopolymere und zur Herstellung der Haftklebemasse, so dass eine breite Palette von Haftklebeeigenschaften durch die chemische Zusammensetzung eingestellt werden kann,
- Ermöglichung der Herstellung dicker, hoch kohäsiver Haftklebemassenschichten, insbesondere für repositionierbare Haftklebebänder,
- hohe Prozessgeschwindigkeiten durch Beschichtung aus der Schmelze
- Verzicht auf eine zusätzliche Vernetzung ist möglich, insbesondere einer solchen durch actinische Bestrahlung,
- Wahlmöglichkeit bei Einsatz der Comonomere, was eine Steuerung der Wärmescherfestigkeit ermöglicht, insbesondere auch eine anhaltend gute Kohäsion und damit gute Halteleistung bei hohen Temperaturen (z.B. > + 60 °C).

Als Basis für die Kaschierklebemassen können auch mehrere verschiedene Blockcopolymere auf Acrylatbasis gewählt werden. Bevorzugt sind dann solche, bei denen mehrere, besonders bevorzugt alle Blockcopolymere einer oder mehrerer der vorstehend genannten Formeln entsprechen.

Der Anteil der Blockcopolymere an der Kaschierklebemasse beträgt in Summe mindestens 50 Gew.-%. Ein derartiger überwiegender Anteil der Blockcopolymere an der erfindungsgemäßen Kaschierklebemasse stellt in besonderem Maße die hohe ähnliche Sofortklebekraft auf Oberflächen von unterschiedlicher Oberflächenenergie sicher.

Bei den Polymerblöcken P(A) kann es sich um Polymerketten einer einzigen Monomersorte aus der Gruppe A oder um Copolymere aus Monomeren verschiedener Strukturen aus der Gruppe A handeln. Insbesondere können die eingesetzten Monomere A in ihrer chemischen Struktur und/oder in der Seitenkettenlänge variieren. Die Polymerblöcke umfassen somit die Spanne zwischen vollkommen homogenen Polymeren über Polymere aus Monomeren gleicher chemischer Grundstruktur, aber unterschiedlicher Kettenlänge und solchen gleicher Kohlenstoffzahl, aber unterschiedlicher Isomerie bis hin zu statistisch polymerisierten Blöcken aus unterschiedlich langen Monomeren mit unterschiedlicher Isomerie aus der Gruppe A. Das entsprechende gilt für die Polymerblöcke P(B) bezüglich der Monomere aus der Gruppe B.

Die Einheit P(A)-P(B)-P(A) kann dabei sowohl symmetrisch (entsprechend $P^1(A)$-P(B)-$P^2(A)$ mit $P^1(A) = P^2(A)$) als auch unsymmetrisch (etwa entsprechend der Formel $P^3(A)$-P(B)-$P^4(A)$ mit $P^3(A) \neq P^4(A)$, wobei aber sowohl $P^3(A)$ als auch $P^4(A)$ jeweils Polymerblöcke im Sinne der Definition für P(A) sind) aufgebaut sein.

Vorteilhaft ist es, wenn die Blockcopolymere einen symmetrischen Aufbau derart aufweisen, dass in der Kettenlänge und/oder der chemischen Struktur identische Polymerblöcke P(A) und/oder dass in der Kettenlänge und/oder der chemischen Struktur identische Polymerblöcke P(B) vorliegen.

$P^3(A)$ und $P^4(A)$ können sich insbesondere in ihrer chemischen Zusammensetzung und/ oder ihrer Kettenlänge unterscheiden.

Besonders vorteilhaft ist die Verwendung von amorphen Polymerblöcken. In diesem Fall ist die Erweichungstemperatur durch die Glasübergangstemperatur gegeben, die durch Wahl der Comonomerzusammensetzung eingestellt werden kann.

Zur Erzielung einer Glasübergangstemperatur $T_G$ der Polymere von $T_G \leq 10$ °C werden entsprechend dem vorstehend und im weiteren gesagten die Monomere bevorzugt derart ausgesucht und die mengenmäßige Zusammensetzung der Monomermischung vorteilhaft derart gewählt, dass sich nach der Gleichung (G1) (in Analogie zur Fox-Gleichung, vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur eines entsprechenden Homopolymers aus den jeweiligen Monomeren n in Kelvin.

Als Monomere für den Polymerblock P(B) werden vorteilhaft Acrylmonomere eingesetzt. Hierfür sind prinzipiell alle dem Fachmann geläufigen Acrylverbindungen, die sich zur Synthese von Polymeren eignen, einsetzbar. Bevorzugt werden solche Monomere gewählt, welche Glasübergangstemperaturen des Polymerblocks P(B) auch in Kombination mit einem oder mehreren weiteren Monomeren von kleiner +10 °C bedingen und die Oberflächenenergie absenken.

Entsprechend können bevorzugt nicht acrylische Vinylverbindungen gewählt werden.

Für die Präparation der Polymerblöcke P(B) werden vorteilhaft zu 75 bis 100 Gew.-% Acrylsäure- und/oder Methacrylsäurederivate der allgemeinen Struktur

$$CH_2=C(R^1)(COOR^2) \qquad (V)$$

eingesetzt, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt,
und gegebenenfalls bis zu 25 Gew.-% Vinylverbindungen (VI), die funktionelle Gruppen enthalten können.

Bei einer Zusammensetzung des Polymerblocks P(B), wie vorstehend charakterisiert, erhält man Materialien, die die an Kaschierklebemassen im Sinne der Erfindung gestellten Anforderungen besonders gut erfüllen.

Acrylmonomere, die sehr bevorzugt im Sinne der Verbindung (V) als Komponenten für Polymerblöcke P(B) eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie z.B. 2-Ethylhexylacrylat und Isooctylacrylat sowie cyclische Monomere wie z.B. Cyclohexyl-oder Norbornylacrylat und Isobornylacrylat.

Weiterhin können optional als Monomere im Sinne der Definition (VI) für Polymerblöcke P(B) Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in α-Stellung enthalten. Auch hier seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril.

Als besonders bevorzugte Beispiele für vinylgruppenhaltige Monomere im Sinne der Definition (VI) für den Elastomerblock P(B) eignen sich weiterhin Hydroxyethylacrylat, Hydroxypropylacrylat, Hydroxyethylmethacrylat, Hydroxypropylmethacrylat, n-Methylolacrylamid, Acrylsäure, Methacrylsäure, Allylalkohol, Maleinsäureanhydrid, Itaconsäureanhydrid, Itaconsäure, Benzoinacrylat, acryliertes Benzophenon, Acrylamid und Glycidylmethacrylat, um nur einige zu nennen.

In einer bevorzugten Ausführungsform der Kaschierklebesysteme enthält einer der oder enthalten mehrere der Polymerblöcke eine oder mehrere aufgepfropfte Seitenketten. Dabei wird nicht eingeschränkt, ob solche Systeme durch einen *graft-from*-(Aufpolymerisation einer Seitenketten ausgehend von einem bestehenden Polymerrückgrat) oder *graft-to*-Prozeß (Anbindung von Polymerketten an ein Polymerrückgrat über polymeranaloge Reaktionen) erhalten werden.

Insbesondere zur Herstellung solcher Blockcopolymere können als Monomere B derartig funktionalisierte Monomere eingesetzt werden, die einen *graft-from*-Prozeß zum Aufpfropfen von Seitenketten ermöglichen. Hier sind insbesondere Acryl- und Methacrylmonomere zu nennen, die als Funktionalisierung Halogene tragen oder alle anderen funktionellen Gruppen, die beispielsweise einen ATRP-Prozeß (Atom Transfer Radical Polymerization) erlauben. In diesem Zusammenhang sei auch die Möglichkeit genannt, über Makromonomere gezielt Seitenketten in die Polymerketten einzuführen. Die Makromonomere können wiederum entsprechend der Monomere B aufgebaut sein.

In einer speziellen Ausführung dieser Erfindung sind eine oder mehrere funktionelle Gruppen in die Polymerblöcke P(B) eingebaut, die zusätzlich eine strahlenchemische Vernetzung der Polymerblöcke insbesondere mittels UV-Bestrahlung oder durch Bestrahlung mit schnellen Elektronen erlauben. Als Monomereinheiten können mit dieser Zielsetzung insbesondere Acrylester genutzt werden, welche einen ungesättigten Alkylrest mit 3 bis 18 Kohlenstoffatomen enthalten, der mindestens eine Kohlenstoff-Kohlenstoff-Doppelbindung enthält. Für mit Doppelbindungen modifizierte Acrylate eignen sich besonders vorteilhaft Allylacrylat und acrylierte Zimtsäureester. Neben Acrylmonomeren lassen sich sehr vorteilhaft als Monomere für den Polymerblock P(B) auch Vinylverbindungen mit während der (radikalischen)

Polymerisation des Polymerblockes P(B) nicht reaktiven Doppelbindungen einsetzen. Besonders bevorzugte Beispiele für entsprechende Comonomere sind Isopren und/oder Butadien, aber auch Chloropren.

Als Ausgangsmonomere A, die die Bedingung erfüllen, dass die resultierenden Polymerblöcke P(A) mit den Polymerblöcken P(B) nicht mischbar sind und Mikrophasenseparation eintritt, werden vorteilhaft eingesetzt: Vinylaromaten, Methylmethacrylat, Cyclohexylmethacrylat, Isobornylmethacrylat und Isobornylacrylat. Besonders bevorzugte Beispiele sind Methylmethacrylat und Styrol, wobei diese Aufzählung keinen Anspruch auf Vollständigkeit erhebt.

Weiterhin können die Polymerblöcke P(A) auch als Copolymer aufgebaut sein, das zu mindestens 75 % aus den vorstehenden Monomeren A, das zu einer hohen Erweichungstemperatur führt, oder einem Gemisch dieser Monomere bestehen kann, aber bis zu 25 % Monomere B enthält, die zu einer Erniedrigung der Erweichungstemperatur des Polymerblocks P(A) führen und/oder die Oberflächenenergie weiter reduzieren. In diesem Sinne seien beispielhaft aber nicht ausschließlich Alkylacrylate genannt, die entsprechend der Struktur (V) und dem hierzu gesagten definiert sind.

In einer weiteren günstigen Ausführungsform der erfinderischen Haftklebemasse sind Polymerblöcke P(A) und/oder P(B) derart funktionalisiert, dass zusätzlich eine thermisch initiierte chemische Vernetzung durchgeführt werden kann. Als Vernetzer können unter anderem in günstiger Weise gewählt werden: Epoxide, Aziridine, Isocyanate, Polycarbodiimide und Metallchelate, um nur einige zu nennen.

Die Möglichkeit zur thermisch initiierten Vernetzung wie auch zur weiter oben genannten strahlenchemischen Vernetzung erweitert noch einmal die Eigenschaftspalette, die durch die erfindungsgemäßen Kaschierklebemassen abgedeckt werden kann. So kann beispielsweise eine irreversible Vernetzung der Klebemasse bewirkt werden.

Ein bevorzugtes Charakteristikum der für die erfindungsgemäßen Kaschierklebesysteme eingesetzten Blockcopolymere ist, dass ihre Molmasse $M_n$ zwischen ca. 10.000 und ca. 600.000 g/mol, bevorzugt zwischen 30.000 und 400.000 g/mol, besonders bevorzugt zwischen 50.000 g/mol und 300.000 g/mol liegt. Der Anteil der Polymerblöcke P (A) liegt vorteilhaft zwischen 5 und 49 Gewichtsprozent des gesamten Blockcopolymers, bevorzugt zwischen 7,5 und 35 Gewichtsprozent, besonders bevorzugt zwischen 10 und 30 Gewichtsprozent. Die Polydispersität des Blockcopolymers liegt bevorzugt bei kleiner 3, gegeben durch den Quotienten aus Massenmittel $M_w$ und Zahlenmittel $M_n$ der Molmassenverteilung.

Die Verhältnisse der Kettenlängen der Blockcopolymere P(A) zu denen der Blockcopolymere P(B) werden in sehr vorteilhafter Vorgehensweise so gewählt, dass die Blockcopolymere P(A) als disperse Phase ("Domänen") in einer kontinuierlichen Matrix der Polymerblöcke P(B) vorliegen. Dies ist bevorzugt der Fall bei einem Gehalt an Polymerblöcken P(A) von kleiner als 25 Gew.-%. Die Domänen können bevorzugt kugelförmig oder verzerrt kugelförmig vorliegen. Die Ausbildung von hexagonal gepackten zylindrischen Domänen der Polymerblöcke P(A) ist ebenfalls im erfinderischen Sinne möglich.

Weiterhin kann es vorteilhaft sein, Blends der obengenannten Blockcopolymere mit Diblockcopolymeren P (A)-P(B) einzusetzen, wobei zur Herstellung der entsprechenden Polymerblöcke P(A) und P(B) die gleichen Monomere wie oben genutzt werden können. Außerdem kann es von Vorteil sein, der aus den Blockcopolymeren, insbesondere aus Triblockcopolymeren (I), oder der aus einem Blockcopolymer/Diblockcopolymer-Blend bestehenden Haftklebemasse zur Verbesserung ihrer Eigenschaften Polymere P'(A) und/oder P'(B) zuzusetzen.

Dementsprechend betrifft die Erfindung weiterhin Kaschierklebesysteme, bei denen die Haftklebemasse einen Blend eines oder mehrerer Blockcopolymere mit einem Diblockcopolymer P(A)-P(B),

- wobei die Polymerblöcke P(A) (der einzelnen Diblockcopolymere) unabhängig voneinander Homo- und/oder Copolymerblöcke aus den Monomeren A repräsentieren, wobei die Polymerblöcke P(A) jeweils eine Erweichungstemperatur im Bereich von + 20 °C bis + 175 °C aufweisen,
- wobei die Polymerblöcke P(B) (der einzelnen Diblockcopolymere) unabhängig voneinander Homo- und/oder Copolymerblöcke aus den Monomeren B repräsentieren, wobei die Polymerblöcke P(B) jeweils eine Erweichungstemperatur im Bereich von - 130 °C bis + 10 °C aufweisen,

und/oder mit Polymeren P'(A) und/oder P'(B),

- wobei die Polymere P'(A) Homo- und/oder Copolymere aus den Monomeren A repräsentieren, wobei die Polymere P'(A) jeweils eine Erweichungstemperatur im Bereich von + 20 °C bis + 175 °C aufweisen,
- wobei die Polymere P'(B) Homo- und/oder Copolymere aus den Monomeren B repräsentieren, wobei die Polymere P'(B) jeweils eine Erweichungstemperatur im Bereich von - 130 °C bis + 10 °C aufweisen,
- wobei die Polymere P'(A) beziehungsweise P'(B) bevorzugt mit den Polymerblöcken P(A) beziehungsweise P(B) mischbar sind,

darstellt.

Sofern sowohl Polymere P'(A) und Polymere P'(B) zugemischt sind, werden diese vorteilhaft derart gewählt, dass die Polymere P'(A) und P'(B) nicht homogen miteinander mischbar sind.

Als Monomere für die Diblockcopolymere P(A)-P(B), für die Polymere P'(A) beziehungsweise P'(B) werden bevorzugt die bereits genannten Monomere der Gruppen A und B eingesetzt.

Die Diblockcopolymere weisen bevorzugt eine Molmasse $M_n$ zwischen 5.000 und 600.000 g/mol, mehr bevorzugt zwischen 15.000 und 400.000 g/mol, besonders bevorzugt zwischen 30.000 und 300.000 g/mol auf. Sie besitzen vorteilhaft eine Polydispersität $D = M_w/M_n$ von nicht mehr als 3. Es ist günstig, wenn der Anteil der Polymerblöcke P(A) in Bezug auf die Zusammensetzung des Diblockcopolymers zwischen 3 und 50 Gew.-%, bevorzugt zwischen 5 und 35 Gew.-% liegt.

Vorteilhaft können auch die Diblockcopolymere eine oder mehrere aufgepfropfte Seitenketten aufweisen.

Typische Einsatzkonzentrationen von Diblockcopolymeren im Blend betragen bis zu 250 Gewichts-Teile auf 100 Gewichtsteile höhere Blockcopolymere enthaltend die Einheit P(A)-P(B)-P(A). Die Polymere P'(A) beziehungsweise P'(B) können als Homo- und auch als Copolymere aufgebaut sein. Sie werden entsprechend dem oben gesagten vorteilhaft derart gewählt, dass sie mit den Blockcopolymeren P(A) beziehungsweise P(B) verträglich sind. Die Kettenlänge der Polymere P'(A) beziehungsweise P'(B) ist in bevorzugter Weise derart gewählt, dass sie die des mit ihr bevorzugt mischbaren bzw. assoziierbaren Polymerblocks nicht übersteigt, vorteilhaft 10 % niedriger, sehr vorteilhaft 20 % niedriger ist als diese. Der B-Block kann auch so gewählt werden, dass seine Länge die Hälfte der Blocklänge des B-Blocks des Triblockcopolymers nicht übersteigt.

Zur Herstellung der in den erfindungsgemäß verwendeten Kaschierklebemassen eingesetzten Blockcopolymere können prinzipiell alle kontrolliert oder lebend verlaufenden Polymerisationen eingesetzt werden, ebenso auch Kombinationen verschiedener kontrollierter Polymerisationsverfahren. Hierbei seien z.B., ohne den Anspruch auf Vollständigkeit zu besitzen, neben der anionischen Polymerisation die ATRP, die Nitroxid/TEMPO- kontrollierte Polymerisation oder mehr bevorzugt der RAFT-Prozess genannt, also insbesondere solche Verfahren, die eine Kontrolle der Blocklängen, Polymerarchitektur oder auch, aber nicht notwendigerweise, der Taktizität der Polymerkette erlauben.

Radikalische Polymerisationen können in Gegenwart eines organischen Lösungsmittels oder in Gegenwart von Wasser oder in Gemischen aus organischen Lösungsmitteln und/oder organischer Lösungsmittel mit Wasser oder in Substanz durchgeführt werden. Bevorzugt wird so wenig Lösungsmittel wie möglich eingesetzt. Die Polymerisationszeit für radikalische Prozesse beträgt - je nach Umsatz und Temperatur - typischerweise zwischen 4 und 72 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan, n-Heptan oder Cyclohexan), Ketone (wie Aceton oder Methylethylketon), Siedegrenzenbenzin, aromatische Lösungsmittel wie Toluol oder Xylol oder Gemische vorgenannter Lösungsmittel verwendet. Für die Polymerisation in wässrigen Medien beziehungsweise Gemischen aus organischen und wässrigen Lösungsmitteln werden zur Polymerisation bevorzugt Emulgatoren und Stabilisatoren zugesetzt. Als Polymerisationsinitiatoren werden vorteilhaft übliche radikalbildende Verbindungen wie beispielsweise Peroxide, Azoverbindungen und Peroxosulfonate eingesetzt. Auch Initiatorengemische eignen sich hervorragend.

Zur Radikalstabilisierung werden in günstiger Vorgehensweise Nitroxide des Typs (NIT 1) oder (NIT 2) eingesetzt:

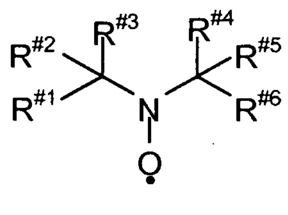

(NIT 1)

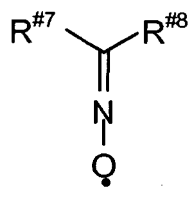

(NIT 2)

wobei $R^{\#1}$, $R^{\#2}$, $R^{\#3}$, $R^{\#4}$, $R^{\#5}$, $R^{\#6}$, $R^{\#7}$, $R^{\#8}$ unabhängig voneinander folgende Verbindungen oder Atome bedeuten:

i) Halogenide, wie z.B. Chlor, Brom oder Iod

ii) lineare, verzweigte, cyclische und heterocyclische Kohlenwasserstoffe mit 1 bis 20 Kohlenstoffatomen, die gesättigt, ungesättigt oder aromatisch sein können,

iii) Ester $-COOR^{\#9}$ , Alkoxide $-OR^{\#10}$ und/oder Phosphonate $-PO(OR^{\#11})_2$, wobei $R^{\#9}$, $R^{\#10}$ und/oder $R^{\#11}$ für Reste aus der Gruppe ii) stehen.

Verbindungen der Struktur (NIT 1) oder (NIT 2) können auch an Polymerketten jeglicher Art gebunden sein (vorrangig in dem Sinne, dass zumindest einer der oben genannten Reste eine derartige Polymerkette darstellt) und somit zum Aufbau der Blockcopolymere als Makroradikale oder Makroregler genutzt werden.

Mehr bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

Eine Reihe weiterer Polymerisationsmethoden, nach denen die Kaschierklebemassen in alternativer Vorgehensweise hergestellt werden können, lassen sich aus dem Stand der Technik wählen:
US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode lässt sich in vorteilhafter Weise zur Synthese der Blockcopolymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Weiterhin vorteilhaft kann das erfindungsgemäß genutzte Blockcopolymer über eine anionische Polymerisation hergestellt werden. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird im Allgemeinen durch die Struktur $P_L(A)$-Me repräsentiert, wobei Me ein Metall der Gruppe I des Periodensystems, wie z.B. Lithium, Natrium oder Kalium, und $P_L(A)$ ein wachsender Polymerblock aus den Monomeren A ist. Die Molmasse des herzustellenden Polymerblocks wird durch das Verhältnis von Initiatorkonzentration zu Monomerkonzentration vorgegeben. Zum Aufbau der Blockstruktur werden zunächst die Monomere A für den Aufbau eines Polymerblocks P(A) hinzugegeben, dann wird anschließend durch Zugabe der Monomere B ein Polymerblock P(B) angeknüpft und nachfolgend durch erneute Zugabe von Monomeren A ein weiterer Polymerblock P(A) anpolymerisiert, so dass ein Triblockcopolymer P(A)-P(B)-P(A) entsteht. Alternativ kann P(A)-P(B)-M durch eine geeignete difunktionelle Verbindung gekuppelt werden. Auf diesem Weg sind auch Sternblockcopolymere $(P(B)-P(A))_n$ zugäng lich. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr

bevorzugten Version sind die Liganden und Coinitiatoren so gewählt, dass Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Als sehr bevorzugter Herstellprozess wird eine Variante der RAFT-Polymerisation (reversible addition-fragmentation chain transfer polymerization) durchgeführt. Der Polymerisationsprozeß ist z. B. in den Schriften WO 98/01478 A1 und WO 99/31144 A1 ausführlich beschrieben. Zur Herstellung von Triblockcopolymeren eignen sich besonders vorteilhaft Trithiocarbonate der allgemeinen Struktur R'''-S-C(S)-S-R''' (Macromolecules 2000, 33, 243-245), mittels derer in einem ersten Schritt Monomere für die Endblöcke P(A) polymerisiert werden. In einem zweiten Schritt wird anschließend der Mittelblock P(B) synthetisiert. Nach der Polymerisation der Endblöcke P(A) kann die Reaktion abgebrochen und reinitiiert werden. Ferner kann auch ohne Reaktionsunterbrechung sequentiell polymerisiert werden. In einer sehr vorteilhaften Variante werden beispielsweise die Trithiocarbonate (TTC1) und (TTC2) oder die Thioverbindungen (THI1) und (THI2) zur Polymerisation eingesetzt, wobei $\phi$ ein Phenylring, der unfunktionalisiert oder durch Alkyl- oder Arylsubstituenten, die direkt oder über Ester- oder Etherbrücken verknüpft sind, funktionalisiert sein kann, oder eine Cyanogruppe sein kann, oder einen gesättigten oder ungesättigten aliphatischen Rest sein kann. Der Phenylring $\phi$ kann optional einen oder mehrere Polymerblöcke, beispielsweise Polybutadien, Polyisopren, Polychloropren oder Poly(meth)acrylat, das entsprechend der Definition für P(A) oder P(B) aufgebaut sein kann, oder Polystyrol tragen, um nur einige zu nennen. Funktionalisierungen können beispielsweise Halogene, Hydroxygruppen, Epoxidgruppen, stickstoff- oder schwefelenthaltende Gruppen sein, ohne dass diese Liste Anspruch auf Vollständigkeit erhebt.

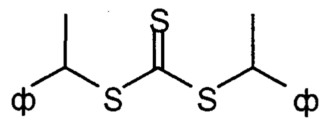

(TTC 1)

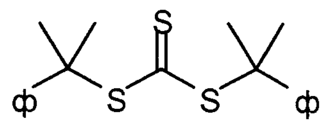

(TTC 2)

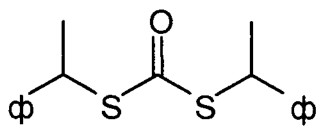

(THI 1)

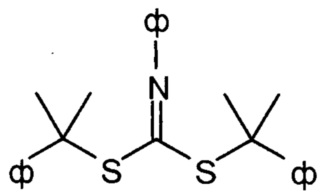

(THI 2)

Außerdem können Thioester der allgemeinen Struktur

$R^{\$1}$-C(S)-S-$R^{\$2}$ (THE)

zum Einsatz kommen, insbesondere, um asymmetrische Systeme herzustellen. Dabei können $R^{\$1}$ und $R^{\$2}$ unabhängig voneinander gewählt werden, und $R^{\$1}$ kann ein Rest aus einer der folgenden Gruppen i) bis iv) und $R^{\$2}$ ein Rest aus einer der folgenden Gruppen i) bis iii) sein:

i) $C_1$- bis $C_{18}$-Alkyl, $C_2$- bis $C_{18}$-Alkenyl, $C_2$- bis $C_{18}$-Alkinyl, jeweils linear oder verzweigt; Aryl-, Phenyl-, Benzyl-, aliphatische und aromatische Heterozyklen.
ii) $-NH_2$, -NH-$R^{\$3}$, -$NR^{\$3}R^{\$4}$, -NH-C(O)-$R^{\$3}$, -$NR^{\$3}$-C(O)-$R^{\$4}$, -NH-C(S)-$R^{\$3}$, -$NR^{\$3}$-C(S)-$R^{\$4}$,

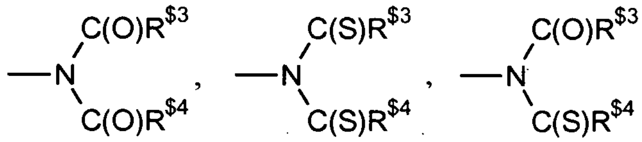

wobei $R^{\$3}$ und $R^{\$4}$ unabhängig voneinander gewählte Reste aus der Gruppe i) sind.

iii) -S-$R^{\$5}$, -S-C(S)-$R^{\$5}$, wobei $R^{\$5}$ ein Rest aus einer der Gruppen i) oder ii) sein kann.

iv) -O-$R^{\$6}$, -O-C(O)-$R^{\$6}$, wobei $R^{\$6}$ ein Rest gewählt aus einer der Gruppen i) oder ii) sein kann.

In Verbindung mit den obengenannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azo-oder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff beschrieben. Diese Methoden werden in bevorzugter Weise angewendet. Beispiele für Radikalquellen sind Peroxide, Hydroperoxide und Azoverbindungen. Als einige nicht ausschließliche Beispiele für typische Radikalinitiatoren seinen hier genannt: Kaliumperoxodisulfat, Dibenzoylperoxid, Cumolhydroperoxid, Cyclohexanonperoxid, Cyclohexylsulfonylacetylperoxid, Di-tert-butylperoxid, Azodiisobutyronitril, Diisopropylpercarbonat, tert-Butylperoctoat, Benzpinacol. In einer sehr bevorzugten Variante wird als radikalischer Initiator 1,1'-Azo-bis-(cyclohexylnitril) (Vazo 88®, DuPont®) oder 2,2-Azo-bis-(2-methylbutannitril) (Vazo 67®, DuPont®) verwendet. Weiterhin können auch Radikalquellen verwendet werden, die erst unter UV-Bestrahlung Radikale freisetzen.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflusst, die Restmonomere im Aufkonzentrationsprozess das Lösemittelrecyclat verunreinigen und die entsprechenden Selbstklebebänder ein sehr hohes Ausgasungsverhalten zeigen würden.

Die oben beschriebenen Kaschierklebemassen werden bevorzugt aus der Schmelze beschichtet. In einer Ausführung der Erfindung wird das Lösemittel bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen. Nach der Aufkonzentration beträgt der Lösungsmittelgehalt bevorzugt ≤ 2 Gew.-%, besonders bevorzugt ≤ 0.5 Gew.-%.

Zur vorteilhaften erfindungsgemäßen Weiterentwicklung können den blockcopolymerhaltigen Kaschierklebemassen Klebharze beigemischt werden. Prinzipiell lassen sich alle in dem entsprechenden Polyacrylatmittelblock P(B) löslichen Harze verwenden. Geeignete Klebharze umfassen unter anderem Kolophonium und Kolophoniumderivate (Kolophoniumester, auch durch z. B. Disproportionierung oder Hydrierung stabilisierte Kolophoniumderivate), Polyterpenharze, Terpenphenolharze, Alkylphenolharze, aliphatische, aromatische und aliphatisch-aromatische Kohlenwasserstoffharze, um nur einige zu nennen. Vorrangig werden Harze gewählt, die vorzugsweise mit dem Polymerblock P (B) verträglich sind. Der Gewichtsanteil der Harze am Blockcopolymer beträgt typischerweise bis zu 40 Gew. %, mehr bevorzugt bis zu 30 Gew. %.

Für eine spezielle Art der Ausführung der Erfindung können auch Harze verwendet werden, die mit dem Polymerblock P(A) verträglich sind.

Weiterhin können optional Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z. B. in Form von primären und sekundären Antioxidantien oder in Form von Lichtschutzmitteln zugesetzt werden.

Bevorzugt wird die innere Festigkeit (Kohäsion) der Haftklebemasse durch die physikalische Vernetzung der Polymerblöcke P(A) erzeugt. Die so erhaltene physikalische Vernetzung ist typischerweise thermoreversibel. Für eine nichtreversible Vernetzung können die Haftklebemassen zusätzlich chemisch vernetzt werden. Hierzu können die acrylatblockcopolymerhaltigen Haftklebemassen, welche für die erfindungsgemäßen reversiblen Systeme eingesetzt werden, optional verträgliche Vernetzersubstanzen enthalten. Als Vernetzer eignen sich z. B. Metallchelate, multifunktionelle Isocyanate, multifunktionelle Amine oder multifunktionelle Alkohole. Auch multifunktionelle Acrylate lassen sich vorteilhaft als Vernetzer für eine actinische Bestrahlung verwenden.

Zur optionalen Vernetzung mit UV-Licht werden den polyacrylathaltigen Blockcopolymeren, welche in den erfindungsgemäßen Systemen zum Einsatz kommen, UV-absorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®),

2,2-Dimethoxy-2-phenyl-1-phenylethanon, Dimethoxyhydroxyacetophenon, substituierte α-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen werden.

Prinzipiell ist es auch möglich, die erfindungsgemäß eingesetzten Kaschierklebemassen mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Für die Herstellung der doppelseitigen Selbstklebebänder mit der Kaschierklebemasse siehe Figur 1, Schicht III) können prinzipiell alle dem Fachmann bekannten Haftklebemassen (Schicht I und V) eingesetzt werden. So eignen sich beispielsweise auf Kautschuk basierende Haftklebemassen, Synthesekautschukhaftklebemassen, Haftklebemassen auf Basis von Polysilikonen, Polyurethanen, Polyolefine oder Polyacrylaten.

Als Trägermaterialien II und IV für die doppelseitigen Haftklebebänder mit erfinderischer Kaschierklebemasse III eignen sich die dem Fachmann geläufigen und üblichen Folien, wie z. B. Polyester, PET, PE, PP, BOPP, PVC etc.). Diese Aufzählung ist nicht abschließend. Besonders bevorzugt wird eine Folie aus Polyethylenterephthalat eingesetzt. Optional können diese Folien physikalisch und/oder chemisch vorbehandelt werden.

Für die Verklebung von Schäumen werden bevorzugt auf PE, PP, PU, PVC und EVA basierende Schäume eingesetzt.

Die Figur 1 zeigt beispielhaft das erfindungsgemäße, doppelseitiges Selbstklebeband.

Die Schichten I bis V bilden ein doppelseitig ausgerüstetes Selbstklebeband. Hierbei bedeuten:

I: Haftklebemasse
II: Folie oder Schaumträger
III: erfindungsgemäße selbstvernetzende Kaschierklebemasse, insbesondere auf Blockcopolymer-Basis
IV: Folie oder Schaumträger
V: Haftklebemasse

Die Haftklebesysteme I und V können die gleiche oder eine unterschiedliche Zusammensetzung sowie auch den gleichen oder unterschiedlichen Masseauftrag besitzen.

Der oben beschriebene Aufbau kann z.B. auch noch durch eine Stabilisierungsfolie ergänzt werden.

Weiterhin kann das erfindungsgemäße doppelseitige Selbstklebeband ein- oder beidseitig mit einer Abdeckung aus Papier oder aus einer entsprechenden Folie, insbesondere einer beidseitig silikonisierten, versehen sein, um ein längeres Lagern und eine bequeme Handhabung während des Gebrauchs zu gewährleisten.

Schließlich betrifft die Erfindung ein Verfahren zur Herstellung von erfindungsgemäßen Selbstklebebändern, bei dem die Kaschierklebemasse über einen Hotmeltprozess beschichtet und nicht der Einwirkung actinischer Strahlung ausgesetzt wird. Das Aufbringen über einen Hotmeltprozess stellt ein sehr einfach durchzuführendes und kostengünstiges Verfahren dar und ermöglicht somit eine besonders einfache und kostengünstige Herstellung von Selbstklebebändern.

Im folgenden werden die Vorteile des erfindungsgemäßen Klebebands in mehreren Versuchen beschrieben.

***Experimente***

Die erfindungsgemäßen Kaschierklebemassen werden im folgenden durch Experimente beschrieben.

Folgende Testmethoden wurden angewendet, um die klebtechnischen Eigenschaften der hergestellten Kaschierklebemassen zu evaluieren.

Testmethoden

180° Klebkrafttest (Testmethode A)

Ein 20 mm breiter Streifen einer auf silikonisiertem Trennpapier beschichtete Kaschierklebemasse wurde mit einem Massenauftrag von 100 g/$m^2$ auf eine 25 μm dicke mit einem Primer versehene PET-Folie umlaminiert und anschließend dieses Klebebandmuster auf eine PET-, PE- oder PS-Testplatte, die zuvor zweimal mit Isopropanol saubergewischt worden war, aufgebracht. Der Kaschierklebestreifen wurde zweimal mit einem 2 kg Gewicht auf das Substrat aufgedrückt. In Anlehnung an PSTC-1 wurde das Klebeband anschließend sofort mit einer Geschwindigkeit von 300 mm/min und im 180° Winkel mittels einer Zugprüfmaschine (z. B. Fa. Zwick) vom Substrat abgezogen.
Die Messergebnisse sind in N/cm angegeben und sind gemittelt aus drei Messungen. Alle Messungen wurden bei Raumtemperatur unter klimatisierten Bedingungen durchgeführt.

Gelpermeationschromatographie (Testmethode B)

Die Bestimmung der mittleren Molekulargewichte $M_n$ und $M_w$ und der Polydispersität D erfolgte durch Gelpermeationschromatographie. Als Eluent wurde THF mit 0.1 Vol.-% Trifluoressigsäure eingesetzt. Die Messung erfolgte bei 25°C. Als Vorsäule wurde PSS-SDV, 5 p, $10^3$ Å, ID 8.0 mm x 50 mm verwendet. Zur Auftrennung wurden die Säulen PSS-SDV, 5 p, $10^3$ sowie $10^5$ und $10^6$ mit jeweils ID 8.0 mm x 300 mm eingesetzt. Die Probenkonzentration betrug 4 g/l, die Durchflussmenge 1.0 ml pro Minute. Es wurde gegen Polystyrol-Standards gemessen.

Oberflächenenergie (Testmethode C)

In Anlehnung an DIN 53364 wurde die Oberflächenenergie der Trägermaterialien mit Testtinten bestimmt. Mit einem Pinsel oder einem besonderen Aufziehgerät wird eine Serie bekannter Flüssigkeiten (Testtinte, Softal Electronic GmbH) in der Reihenfolge ihrer Oberflächenspannungen, auf den zu untersuchenden Untergrund aufgebracht. Wenn eine Flüssigkeit nicht mehr benetzt, d.h. sich innerhalb von 2 Sekunden zu einzelnen Tropfen zusammenzieht, dann entspricht die "*Oberflächenenergie*" der zu prüfenden Oberfläche derjenigen, der zuvorletzt verwendeten Testtinte. Die Werte werden in mN/m angegeben.

Kaschierfestigkeit (Testmethode D)

Zur Messung der Kaschierfestigkeit wird ein 20 mm breiter Streifen und etwa 300 mm langer Probenstreifen einer Kaschierverklebung derart ausgeschnitten, dass der obere und untere Träger auf der selben Seite des Teststreifens ein loses (klebmassenfreies) Ende aufweisen. Zur Messung wird eine Zugprüfmaschine (z. B. Fa. Zwick) eingesetzt. Das lose Ende des unteren Trägers der Kaschierverklebung wird in der unteren Klemmbacke der Prüfmaschine fixiert, während das lose Ende des oberen Trägers in der oberen Klemmbacke, also an der Kraftmessdose eingespannt wird. Die Abzugsgeschwindigkeit beträgt 300 mm/min. Die Messergebnisse sind in N/cm angegeben und sind gemittelt aus drei Messungen. Alle Messungen wurden bei Raumtemperatur unter klimatisierten Bedingungen durchgeführt.

***Prüfmusterherstellung***

*Herstellung eines RAFT-Reglers:*

Die Herstellung des Reglers Dibenzyltrithiocarbonat erfolgte ausgehend von Benzylbromid mit Dischwefelkohlenstoff und Natriumhydroxid nach einer Vorschrift von Synth. Comm., 1988, 18 (13), 1531. Ausbeute 72 %. $^1$H-NMR ($CDCl_3$), δ: 7,20-7,40 ppm (m, 10 H); 3,81 ppm (m, 1 H); 3,71 ppm (m, 1 H); 1,59 ppm (d, 3 H); 1,53 ppm (d, 3 H).

*Herstellung von Polystyrol I:*

In einem für die radikalische Polymerisation konventionellem 2 L Reaktor werden unter Stickstoffatmosphäre 417 g Styrol und 6 g Regler (Dibenzyltrithiocarbonat) und 400 g Toluol vorgelegt. Es wird auf 110 °C Innentemperatur erhitzt und mit 0,2 g Vazo 88™ (DuPont) initiiert. Nach 24 Stunden Reaktionszeit wird mit weiteren 0,2 g Vazo 88™ initiiert und weitere 24 Stunden polymerisiert. Während der Polymerisation steigt die Viskosität merklich an. Zur Kompensation werden 150 g Toluol als Endverdünnung nach 48 Stunden hinzugegeben.
Zur Aufreinigung wurde das Polymer in 4,5 Liter Methanol gefällt, über eine Fritte abfiltriert und anschließend im Vakuumtrockenschrank getrocknet.
Die Durchführung der Gelpermeationschromatographie (Testmethode B) gegen Polystyrol-Standards ergab $M_n$ = 15

400 g/mol und $M_w$ = 20 100 g/mol.

*Herstellung von Polystyrol II:*

In einem für die radikalische Polymerisation konventionellem 10 L Reaktor werden unter Stickstoffatmosphäre 2500 g Styrol und 20,8 g Regler (Dibenzyltrithiocarbonat) und 2500 g Toluol vorgelegt. Es wird auf 100 °C Innentemperatur erhitzt und mit 1 g Vazo 88™ (DuPont) initiiert. Nach 24 Stunden sowie nach 48 Stunden Reaktionszeit wird erneut mit jeweils 1 g Vazo 88™ initiiert. Nach 96 Stunden wird die Polymerisation abgebrochen.
Zur Aufreinigung wurde das Polymer in Methanol gefällt, über eine Fritte abfiltriert und anschließend im Vakuumtrockenschrank getrocknet.
Die Durchführung der Gelpermeationschromatographie (Testmethode B) gegen Polystyrol-Standards ergab $M_n$ = 32700 g/mol und $M_w$ = 38200 g/mol.

Folgende Oberflächenspannungen wurden für die Trägermaterialien gemessen:

PE = 30 mN/m
PS = 38 mN/m
PET = 42 mN/m

**Herstellung der Proben**

Beispiel 1

Ein für radikalische Polymerisationen konventioneller Reaktor wurde mit 120 g Trithiocarbonat-funktionalisiertem Polystyrol I (für Polymerblock P(A)), 499,8 g 2-Ethylhexylacrylat, 499,8 g n-Butylacrylat, 20,4 g Acrylsäure (für Polymerblock P(B)) und 1000 g Aceton befüllt. Nach 20 Minuten Durchleiten von Stickstoff und zweimaligen Entgasen wurde der Reaktor unter Rühren auf 70 °C hochgeheizt und mit 0,2 g Vazo 52™ (DuPont) initiiert. Nach 20 Stunden wurden erneut mit 0.2 g Vazo 52™ (DuPont) initiiert. Nach 24 h war die Polymerisation beendet. Die Durchführung der Gelpermeationschromatographie (Testmethode B) gegen Polystyrolstandards ergab $M_n$ = 68100 g/mol und $M_w$ = 183800 g/mol. Das Polymer wurde mit 30 Gew.-% des Kolophoniumharz Foralyn 90™ (Hercules BV) bezogen auf das Blockcopolymer homogen gemischt. Anschließend wurde im Trockenschrank bei 120°C und 0.1 Torr das Lösemittel entfernt und der Kaschierkleber über eine Schmelzdüse auf verschiedene Trägermaterialien beschichtet. Der Masseauftrag betrug jeweils 100 g/m$^2$.

Beispiel 2

Ein für radikalische Polymerisationen konventioneller Reaktor wurde mit 1000 g Trithiocarbonat-funktionalisiertem Polystyrol II (für Polymerblock P(A)), 2720 g n-Butylacrylat, 2720 g 2-Ethylhexylacrylat, 474 g Acrylsäure (für Polymerblock P(B)) und 7000 g Aceton befüllt. Unter Rühren und Stickstoffgas wurde auf 65 °C Innentemperatur hochgeheizt und 2 g Vazo 67™ (DuPont) hinzugegeben. Nach 20 Stunden wurden mit 0.2 g Vazo 67™ nachinitiiert. Nach 24 Stunden war die Polymerisation beendet. Die Durchführung der Gelpermeationschromatographie (Testmethode B) gegen Polystyrolstandards ergab $M_n$ = 117900 g/mol und $M_w$ = 317900 g/mol. Das Polymer wurde mit 30 Gew.-% des Kolophoniumharz Foralyn 90™ (Hercules BV) bezogen auf das Blockcopolymer homogen gemischt. Anschließend wurde im Trockenschrank bei 120°C und 0.1 Torr das Lösemittel entfernt und der Kaschierkleber über eine Schmelzdüse auf verschiedene Trägermaterialien beschichtet. Der Masseauftrag betrug jeweils 100 g/m$^2$.

**Klebkraftbestimmung der Beispiele**

Für die Verwendung als Kaschierklebemasse wurden die Beispiele 1 und 2 auf geprimerte 23 μm dicke PET-Folie beschichtet und anschließend die Klebkkraft nach Testmethode A die Klebkraft gegen PE, PET und PS bestimmt.

Die Messwerte sind in Tabelle 1 zusammengefasst.

Tabelle 1

| Beispiel | KK-PE in [N/cm] Test A | KK-PS in [N/cm] Test A | KK-PET in [N/cm] Test A |
|---|---|---|---|
| 1 | 2.6 | 5.2 | 5.6 |
| 2 | 2.1 | 6.1 | 6.1 |

100 g/m² Masseauftrag

Weiterhin wurde die Kaschierfestigkeit bestimmt. Hierfür wurde die auf geprimerte 23 μm dicke PET-Folie auf eine 23 μm dicke PET-Folie und 100 μm dicke PE-Folie mit 90°C Laminiertemperatur kaschiert. Anschließend wurde die Kaschierfestigkeit nach Testmethode D gemessen. Die Ergebnisse sind in Tabelle 2 zusammengefasst.

Tabelle 2

| Beispiel | auf PET in [N/cm] Testmeth. D[a] | auf PE in [N/cm] Testmeth. D[b] |
|---|---|---|
| 1 | 3.0 | 4.0 |
| 2 | 8.0 | 3.8 |

[a]Slip-Stick, Delaminierung am ungeprimerten PET
[b]Delaminierung am PE

**Herstellung des doppelseitigen Haftklebebandes:**

Eine 25 μm dicke, beidseitig mit Trichloressigsäure geätzte PET-Folie wurde mit einer konventionellen Acrylathaftklebemasse (National Starch AC Ester 1753) beschichtet. Der Masseauftrag betrug nach Trocknung 20 g/m². Die so beschichteten Muster wurden mit einem beidseitig silikonisierten Trennpapier abgedeckt. Anschließend wurde über einen Transferträger die aus der Schmelze beschichteten Beispiele 1 oder 2 mit einem Masseauftrag von 100 g/m² auf die unbeschichtete Seite des vorherigen Verbundes auflaminiert.

Im folgenden Schritt wurde ein PE-Schaum mit einer Dicke von 500 μm und einem Raumgewicht von 200 kg/m³ zukaschiert. Auf diesen Schaumträger wird dann über einen Transferträger eine handelsübliche Acrylathaftklebemasse (National Starch AC Ester 1753) beschichtet (entsprechend Schicht 9, vgl. Figur 1) mit einem Masseauftrag von 20 g/m² auf die unbeschichteten Seite des vorherigen Verbundes.

Das Haftklebeband kann zur doppelseitigen Verklebung von verschiedenen Substraten eingesetzt werden.

**Patentansprüche**

1. Doppelseitiges Selbstklebeband, bestehend aus zwei außenliegenden Haftklebemassenschichten, zwei Trägermaterialschichten und einer Kaschierklebemassenschicht, **dadurch gekennzeichnet, dass** die Trägermaterialschichten mittels der Kaschierklebemassenschicht miteinander verklebt sind, wobei es sich bei der Kaschierklebemasse um eine selbstvernetzende Klebemasse auf Acrylatblockcopolymerbasis handelt, die auf Oberflächen mit Oberflächenenergien von 30 bis 50 mN/m eine Sofortklebkraft von mindestens 2 N/cm nach Klebkrafttest Testmethode A aufweist, und wobei der Anteil der Blockcopolymere an der Kaschierklebemasse in Summe mindestens 50 Gew.-% beträgt.

2. Doppelseitiges Selbstklebeband nach Anspruch 1, **dadurch gekennzeichnet, dass** die Kaschierklebemasse eine Sofortklebkraft von mindestens 3,5 N/cm aufweist.

3. Doppelseitiges Selbstklebeband nach einem der Ansprüche 1 bis 2, **dadurch gekennzeichnet, dass** die Basis der Kaschierklebemasse von einem Blockcopolymer oder mehreren Blockcopolymeren gebildet wird, wobei das Blockcopolymer bzw. mindestens eines der mehreren Blockcopolymere durch eine oder mehrere der allgemeinen Formeln:

$$P(A)\text{-}P(B)\text{-}P(A) \qquad (I)$$

$$P(B)\text{-}P(A)\text{-}P(B)\text{-}P(A)\text{-}P(B) \qquad (II)$$

$$[P(A)\text{-}P(B)]_nX \qquad (III)$$

$$[P(A)\text{-}P(B)]_nX[P(A)]_m \qquad (IV)$$

beschrieben wird, wobei

- n = 3 bis 12, m = 3 bis 12 und X eine multifunktionelle Verzweigungseinheit darstellt, also ein chemisches

Bauelement, über das mehrere Polymerarme miteinander verknüpft sind,
- die Polymerblöcke P(A) unabhängig voneinander Homo- und/oder Copolymerblöcke aus den Monomeren A repräsentieren, wobei die Polymerblöcke P(A) jeweils eine im Bereich von + 20 °C bis + 175 °C liegende Erweichungstemperatur aufweisen,
- die Polymerblöcke P(B) unabhängig voneinander Homo- und/oder Copolymerblöcke aus den Monomeren B repräsentieren, wobei die Polymerblöcke P(B) jeweils eine im Bereich zwischen - 130 °C bis + 10 °C liegende Erweichungstemperatur aufweisen und
- die Polymerblöcke P(A) und P(B) nicht homogen miteinander mischbar sind.

**4.** Doppelseitiges Selbstklebeband nach Anspruch 3 oder 4, **dadurch gekennzeichnet, dass** die Polymerblöcke P (A) und/oder die Polymerblöcke P(B) Polymerketten einer einzigen Monomersorte aus der Gruppe A bzw. der Gruppe B sind.

**5.** Doppelseitiges Selbstklebeband nach Anspruch 3 oder 4, **dadurch gekennzeichnet, dass** die Polymerblöcke P (A) und/oder die Polymerblöcke P(B) Copolymere aus Monomeren verschiedener Strukturen aus der Gruppe A bzw. der Gruppe B sind.

**6.** Doppelseitiges Selbstklebeband nach einem der Ansprüche 3 bis 5, **dadurch gekennzeichnet, dass** in der Kaschierklebemasse zumindest ein Triblockcopolymer enthalten ist, das einen symmetrischen Aufbau derart aufweisen, dass in der Kettenlänge und/oder der chemischen Struktur identische Polymerblöcke P(A) vorliegen.

**7.** Doppelseitiges Selbstklebeband nach einem der Ansprüche 3 bis 6, **dadurch gekennzeichnet, dass** die Polymerblöcke amorph sind.

**8.** Doppelseitiges Selbstklebeband nach einem der Ansprüche 3 bis 7, **dadurch gekennzeichnet, dass** die Ausgangsmonomere für die Polymerblöcke P(B) zu 75 bis 100 Gew.-% Acrylsäure- und/oder Methacrylsäurederivate der allgemeinen Struktur

$$CH_2=C(R^1)(COOR^2) \qquad (V),$$

umfassen, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt, und
gegebenenfalls bis zu 25 Gew.-% nicht acrylische Vinylverbindungen (VI) sind.

**9.** Doppelseitiges Selbstklebeband nach einem der Ansprüche 3 bis 8, **dadurch gekennzeichnet, dass** in die Polymerblöcke P(B) eine oder mehrere funktionelle Gruppen eingebaut sind, die eine strahlenchemische oder eine thermisch initiierte Vernetzung der Polymerblöcke ermöglichen.

**10.** Verfahren zur Herstellung von doppelseitigen Selbstklebebändern nach einem der vorstehenden Ansprüche, **dadurch gekennzeichnet, dass** die Kaschierklebemasse über einen Hotmeltprozess beschichtet und nicht der Einwirkung actinischer Strahlung ausgesetzt wird.

## Claims

**1.** Double-sided self-adhesive tape consisting of two outer layers of pressure-sensitive adhesive, two layers of carrier material and one layer of laminating adhesive, **characterized in that** the layers of carrier material are bonded to one another by means of the layer of laminating adhesive, the laminating adhesive being a self-crosslinking adhesive based on acrylate block copolymer and having, on surfaces with surface energies of 30 to 50 mN/m, an instantaneous bond strength of at least 2 N/cm according to bond strength test method A, and the fraction of block copolymers in the laminating adhesive totalling at least 50% by weight.

**2.** Double-sided self-adhesive tape according to Claim 1, **characterized in that** the laminating adhesive has an instantaneous bond strength of at least 3.5 N/cm.

**3.** Double-sided self-adhesive tape according to either of Claims 1 and 2, **characterized in that** the basis of the laminating adhesive is formed by a block copolymer or two or more block copolymers, the block copolymer or at least one of the two or more block copolymers being described by one or more of the general formulae:

$$P(A)\text{-}P(B)\text{-}P(A) \qquad (I)$$

$$P(B)\text{-}P(A)\text{-}P(B)\text{-}P(A)\text{-}P(B) \qquad (II)$$

$$[P(A)\text{-}P(B)]_nX \qquad (III)$$

$$[P(A)\text{-}P(B)]_nX[P(A)]_m \qquad (IV)$$

where

- n = 3 to 12, m = 3 to 12 and X represents a polyfunctional branching unit, in other words a chemical structural element via which two or more polymer arms are linked to one another,
- the polymer blocks P(A) independently of one another represent homopolymer and/or copolymer blocks of the monomers A, the polymer blocks P(A) each having a softening temperature in the range from +20°C to +175°C,
- the polymer blocks P(B) independently of one another represent homopolymer and/or copolymer blocks of the monomers B, the polymer blocks P(B) each having a softening temperature in the range between -130°C to +10°C, and
- the polymer blocks P(A) and P(B) are not homogeneously miscible with one another.

4. Double-sided self-adhesive tape according to Claim 3 or 4, **characterized in that** the polymer blocks P(A) and/or the polymer blocks P(B) are polymer chains of a single kind of monomer from group A and group B respectively.

5. Double-sided self-adhesive tape according to Claim 3 or 4, **characterized in that** the polymer blocks P(A) and/or the polymer blocks P(B) are copolymers of monomers of different structures from group A and group B respectively.

6. Double-sided self-adhesive tape according to any of Claims 3 to 5, **characterized in that** in the laminating adhesive there is at least one triblock copolymer having a symmetrical construction such that polymer blocks P(A) are present which are identical in chain length and/or in chemical structure.

7. Double-sided self-adhesive tape according to any of Claims 3 to 6, **characterized in that** the polymer blocks are amorphous.

8. Double-sided self-adhesive tape according to any of Claims 3 to 7, **characterized in that** the starting monomers for the polymer blocks P(B) comprise, to an extent of 75% to 100% by weight, acrylic and/or methacrylic acid derivatives of the general structure

$$CH_2{=}C(R^1)(COOR^2) \qquad (V),$$

where $R^1$ = H or $CH_3$ and $R^2$ = H or linear, branched or cyclic, saturated or unsaturated alkyl radicals having 1 to 30, more particularly having 4 to 18, carbon atoms, and
optionally up to 25% by weight of non-acrylic vinyl compounds (VI).

9. Double-sided self-adhesive tape according to any of Claims 3 to 8, **characterized in that** incorporated in the polymer blocks P(B) there are one or two or more functional groups which permit radiation crosslinking or thermally initiated crosslinking of the polymer blocks.

10. Method for producing double-sided self-adhesive tapes according to any of the preceding claims, **characterized in that** the laminating adhesive is coated via a hotmelt operation and is not exposed to the action of actinic radiation.

**Revendications**

1. Bande adhésive double face, constituée par deux couches de masse autoadhésive externes, deux couches de matériau support et une couche de masse adhésive de contrecollage, **caractérisée en ce que** les couches de matériau support sont collées l'une avec l'autre au moyen de la couche de masse adhésive de contrecollage, où il s'agit, pour la masse adhésive de contrecollage, d'une masse adhésive autoréticulante à base d'un copolymère à

blocs d'acrylate, qui présente sur les surfaces présentant des énergies superficielles de 30 à 50 mN/m une adhésivité immédiate d'au moins 2 N/cm selon le test d'adhésivité, méthode de test A, et où la proportion de copolymères à blocs par rapport à la masse adhésive de contrecollage est au total d'au moins 50% en poids.

2. Bande autoadhésive double face selon la revendication 1, **caractérisée en ce que** la masse adhésive de contrecollage présente une adhésivité immédiate d'au moins 3,5 N/cm.

3. Bande autoadhésive double face selon l'une quelconque des revendications 1 à 2, **caractérisée en ce que** la base de la masse adhésive de contrecollage est formée par un copolymère à blocs ou plusieurs copolymères à blocs, où le copolymère à blocs ou, selon le cas, au moins un des plusieurs copolymères à blocs est décrit par une ou plusieurs des formules générales :

$$P(A)-P(B)-P(A) \quad (I)$$

$$P(B)-P(A)-P(B)-P(A)-P(B) \quad (II)$$

$$[P(A)-P(B)]_nX \quad (III)$$

$$[P(A)-P(B)]_nX[P(A)]_m \quad (IV)$$

où

- n = 3 à 12, m = 3 à 12 et X représente une unité de ramification multifonctionnelle, c'est-à-dire un élément chimique via lequel plusieurs bras polymères sont liés les uns aux autres,
- les blocs polymères P(A) représentent, indépendamment les uns des autres, des blocs homopolymères et/ou copolymères des monomères A, les blocs polymères P(A) présentant à chaque fois une température de ramollissement située dans la plage de +20°C à +175°C,
- les blocs polymères P(B) représentent, indépendamment les uns des autres, des blocs homopolymères et/ou copolymères des monomères B, les blocs polymères P(B) présentant à chaque fois une température de ramollissement située dans la plage entre -130°C à +10°C et
- les blocs polymères P(A) et P(B) ne sont pas miscibles de manière homogène les uns avec les autres.

4. Bande autoadhésive double face selon la revendication 3 ou 4, **caractérisée en ce que** les blocs polymères P(A) et/ou les blocs polymères P(B) sont des chaînes polymères d'un seul type de monomères du groupe A ou, selon le cas, du groupe B.

5. Bande autoadhésive double face selon la revendication 3 ou 4, **caractérisée en ce que** les blocs polymères P(A) et/ou les blocs polymères P(B) sont des copolymères de monomères de différentes structures du groupe A ou, selon le cas, du groupe B.

6. Bande autoadhésive double face selon l'une quelconque des revendications 3 à 5, **caractérisée en ce que** la masse adhésive de contrecollage contient au moins un copolymère à trois blocs, qui présente une structure symétrique **en ce qu'**il existe des blocs polymères P(A) identiques en ce qui concerne la longueur de chaîne et/ou la structure chimique.

7. Bande autoadhésive double face selon l'une quelconque des revendications 3 à 6, **caractérisée en ce que** les blocs polymères sont amorphes.

8. Bande autoadhésive double face selon l'une quelconque des revendications 3 à 7, **caractérisée en ce que** les monomères de départ pour les blocs polymères P(B) comprennent à raison de 75 à 100% en poids de dérivés de l'acide acrylique et/ou méthacrylique de structure générale

$$CH_2=C(R^1)(COOR^2) \quad (V),$$

où $R^1$ = H ou $CH_3$ et $R^2$ = H ou des radicaux alkyle linéaires, ramifiés ou cycliques, saturés ou insaturés comprenant 1 à 30, en particulier 4 à 18 atomes de carbone et le cas échéant jusqu'à 25% en poids de composés de vinyle non acryliques (VI).

9. Bande autoadhésive double face selon l'une quelconque des revendications 3 à 8, **caractérisée en ce qu'**un ou plusieurs groupes fonctionnels qui permettent une réticulation chimique par des rayons ou initiée thermiquement des blocs polymères est/sont incorporé(s) dans les blocs polymères P(B).

10. Procédé pour la fabrication de bandes autoadhésives double face selon l'une quelconque des revendications précédentes, **caractérisé en ce que** la masse adhésive de contrecollage est revêtue via un procédé de masse fondue à chaud et n'est pas soumise à l'effet d'un rayonnement actinique.

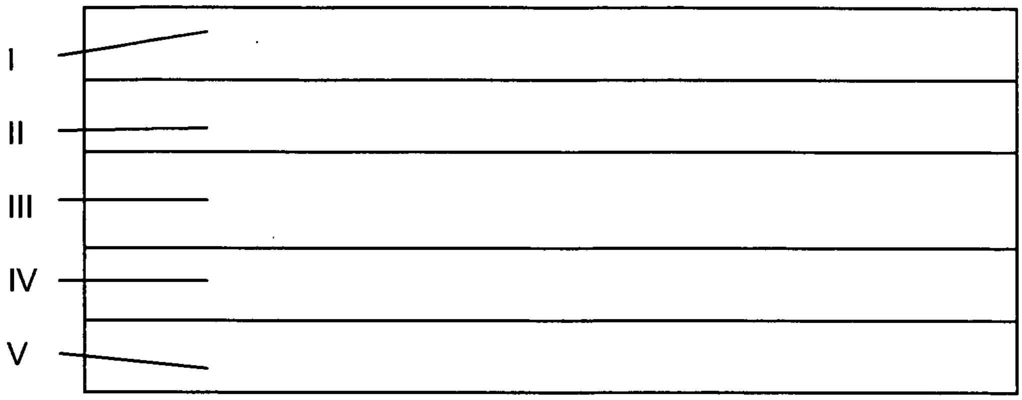


Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A
- WO 9801478 A1
- WO 9931144 A1


### In der Beschreibung aufgeführte Nicht-Patentliteratur


- Analogie zur Fox-Gleichung, vgl. T.G. Fox. *Bull. Am. Phys. Soc.,* 1956, vol. 1, 123
- **HAWKER.** *Beitrag zur Hauptversammlung der American Chemical Society,* 1997
- **HUSEMANN.** *Beitrag zum IUPAC World-Polymer Meeting*
- *Macromolecules,* 1995, vol. 28, 7886
- *Macromolecules,* 2000, vol. 33, 243-245
- **FOUASSIER.** hotoinititation, Photopolymerization and Photocuring: Fundamentals and Applications. Hanser-Verlag, 1995
- **CARROY et al.** Chemistry and Technology of UV and EB Formulation for Coatings, Inks and Paints. SITA, 1994
- Chemistry and Technology of UV and EB formulation for Coatings. Inks and Paints. SITA, 1991, vol. 1
- *Synth. Comm.,* 1988, vol. 18 (13), 1531